# EUROPEAN PATENT APPLICATION

(11) **EP 3 421 880 A1**
(43) Date of publication of application: **02.01.2019**
(21) Application number: 17178795.5
(22) Date of filing: 29.06.2017
(51) Int. Cl.: F21V 8/00, G02F 1/1335

(54) **LIGHT SOURCE ARRANGEMENT, DISPLAY DEVICE, AND METHODS OF OPERATION**

(71) Applicant: Vestel Elektronik Sanayi ve Ticaret A.S., 45030 Manisa (TR)
(72) Inventor: SARIARSLAN, Muhammet Kürsat, 45030 Manisa (TR)
(74) Representative: Flint, Adam

(57) **Abstract**

A light source arrangement (30) has a light source (31) for emitting light and a chamber (34) for receiving light emitted by the light source (31). The chamber (34) has a first wall (35) through which light emitted by the light source (31) can pass into the interior of the chamber (34). The chamber (34) has a second wall (36) through which light in the interior of the chamber (34) can pass to exit the interior of the chamber (34). The second wall (36) is controllable so as to be selectively transparent to allow light to exit the interior of the chamber (34) and to be selectively reflective to reflect light within the interior of the chamber (34).

## Description

### Technical Field

The present disclosure relates to a light source arrangement, a display device, and methods of operation.

### Background

There are many devices and apparatus that need or provide light sources. Conventionally, when increased brightness is required, the power of the light source is increased. However, this typically leads to increased operating temperature and increased power consumption.

### Summary

According to a first aspect disclosed herein, there is provided a light source arrangement, the light source arrangement comprising:
a light source for emitting light; and
a chamber for receiving light emitted by the light source;
the chamber having a first wall through which light emitted by the light source can pass into the interior of the chamber;
the chamber having a second wall through which light in the interior of the chamber can pass to exit the interior of the chamber;
the second wall being controllable so as to be selectively transparent to allow light to exit the interior of the chamber and to be selectively reflective to reflect light within the interior of the chamber.

In an example, the first wall is controllable so as to be selectively transparent to allow light emitted by the light source to pass into the interior of the chamber and to be selectively reflective to reflect light within the interior of the chamber.

In an example, the first wall is transparent to light entering the chamber from the outside and reflective to light within the interior of the chamber.

In an example, the light source and the chamber are arranged such that when the second wall is controlled to be transparent, light exiting the interior of the chamber and light emitted by the light source pass together to an object to be illuminated.

In an example, the light source arrangement comprises plural light sources and plural corresponding chambers, each chamber having a first wall through which light emitted by the corresponding light source can pass into the interior of the chamber and a second wall through which light in the interior of the chamber can pass to exit the interior of the chamber, the second wall being controllable so as to be selectively transparent to allow light to exit the interior of the chamber and to be selectively reflective to reflect light within the interior of the chamber.

There may also be provided a backlight unit for illuminating one or more display elements of a display device, the backlight unit comprising a light source arrangement as described above.

There may also be provided a display device, the display device comprising:
a plurality of controllable display elements which can be selectively controlled to transmit light and to block light, and
a backlight unit comprising a light source arrangement as described above;
wherein each display element is associated with a respective light source and corresponding chamber which are arranged to illuminate the display element.

According to a second aspect disclosed herein, there is provided a method of operating a light source arrangement, the light source arrangement comprising a light source for emitting light and a chamber for receiving light emitted by the light source, the chamber having at least first and second walls, the method comprising:
emitting light from the light source to pass through the first wall of the chamber into the interior of the chamber; and
selectively controlling the second wall so as to be reflective thereby to reflect light within the interior of the chamber, and
subsequently selectively controlling the second wall so as to be transparent thereby to allow light to exit the interior of the chamber.

In an example, the method comprises:
selectively controlling the first wall so as to be transparent to allow light emitted by the light source to pass into the interior of the chamber; and
subsequently selectively controlling the first wall so as to be reflective to reflect light within the interior of the chamber.

According to a third aspect disclosed herein, there is provided a method of operating a display device, the display device comprising a plurality of controllable display elements which can be selectively controlled to transmit light and to block light, and the display device comprising a backlight unit comprising a light source arrangement comprising plural light sources and plural corresponding chambers, each chamber having at least first and second walls, each display element being associated with a respective light source and corresponding chamber which are arranged to illuminate the display element, the method comprising:
for at least one display element and associated chamber and light source:
   emitting light from the light source to pass through the first wall of the associated chamber into the interior of the chamber;
   selectively controlling the second wall of the chamber so as to be reflective thereby to reflect light within the interior of the chamber; and
   selectively controlling the second wall of the corresponding chamber so as to be transparent thereby to allow light to exit the interior of the chamber towards the display element.

In an example, the method is carried out for all display elements and associated chambers and light sources.

In an example, for each display element and associated chamber and light source, the light source and the chamber are arranged such that when the second wall is controlled to be transparent, light exiting the interior of the chamber and light emitted by the light source pass together to the associated display element.

### Brief Description of the Drawings

To assist understanding of the present disclosure and to show how embodiments may be put into effect, reference is made by way of example to the accompanying drawings in which:
Figure 1 shows schematically a side view of a display device having a direct-lit backlight;
Figure 2 shows schematically a side view of a display device having an edge - lit backlight; and
Figures 3A to 3C show schematically three stages in operation of a light source arrangement as described herein.

### Detailed Description

Many devices and apparatus need or provide light sources. Examples include torches (flashlights), lamps or luminaires, many consumer electronics apparatus or devices, display devices for many different types of consumer apparatus, including for example television screens or monitors, computer displays or monitors, and displays for other computing devices, including smartphones, tablet computers, laptop computers, etc. Conventionally, when increased brightness is required, the power of the light source is simply increased. However, this typically leads at least to increased operating temperatures and increased power consumption.

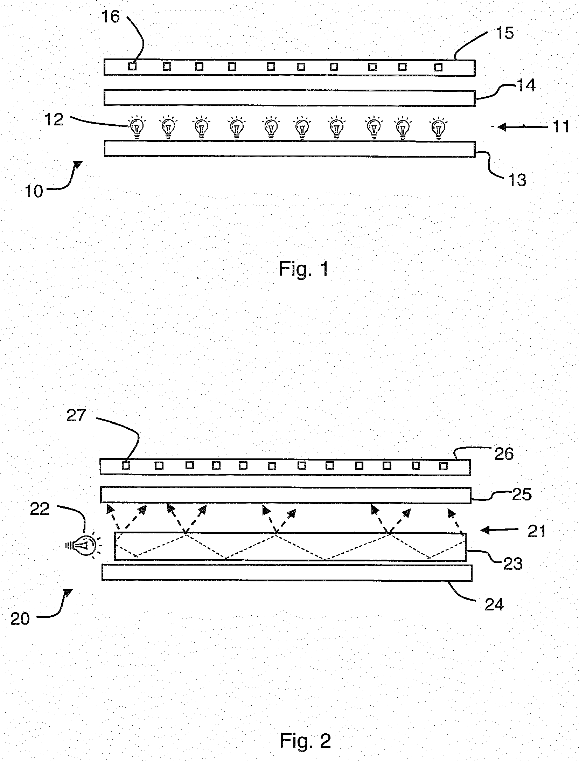

Figure 1 shows schematically a side view of a display device 10 having a direct-lit backlight 11. As is known, the direct-lit backlight 11 has plural light sources 12 for emitting light. The light sources 12 may be for example LEDs (light emitting diodes). The light sources 12 are arranged typically in a regular array on a reflector panel 13. The light sources 12 emit light which is directed through a diffuser 14 to a display panel 15. The diffuser 14 helps to reduce glare that can otherwise occur. The display panel 15 is formed of or includes a number of display elements 16 (which are also often referred to as "pixels" as they typically correspond to pixels in the image that is displayed). The display elements 16 are controllable so as to selectively transmit or prevent light from the light sources 12 passing through the display panel 15. The display elements 16 may be for example LCDs (liquid crystal display devices). In a display device 10 having a direct-lit backlight 11, generally there is a light source 12 for each display element 16.

Referring now to Figure 2, there is shown another example of a display device 20. This example has an edge-lit backlight 21. That is, there is at least one light source 22 which is arranged at or towards an edge of the display device 20. Commonly, there are light sources 22 arranged around each of the four edges of the display device 20. The light sources 22 are typically elongate and may be for example cold-cathode fluorescent lamps. In other examples, the light sources 22 located at the edges are plural LEDs or other individual light sources arranged along the edges of the display device 20. The light sources 22 emit light into a light guide 23 which is mounted in front of a reflector 24. The light guide 23 directs the light through a diffuser 25 into a display panel 26. Similarly to the example of Figure 1, the display panel 26 may have plural individually controllable display elements 27. The display elements 27 may be for example LCDs.

In these and other examples, in order to increase the brightness that is ultimately output by the display device, typically the electrical power supplied to the light sources 12, 22 is increased. This results in an increased operating temperature, which is undesirable in most applications, and also increased power consumption, which is clearly undesirable. Here it is mentioned that display devices that use LEDs as their backlights typically rapidly switch the LEDs on and off during normal operation. Pulse width modulation (PWM) is typically used to control the LEDs. To increase the brightness, the on time of duty cycle of the PWM is increased, leading to increased overall power consumption and temperatures.

In accordance with aspects described herein, a light source arrangement has a light source for emitting light and a chamber for receiving light emitted by the light source. The chamber has a first wall through which light emitted by the light source can pass into the interior of the chamber. The chamber has a second wall through which light in the interior of the chamber can pass to exit the interior of the chamber. The second wall is controllable so as to be selectively transparent to allow light to exit the interior of the chamber and to be selectively reflective to reflect light within the interior of the chamber. The light chamber can be used to store or buffer light. The stored light is then released when required. The stored light may be released to illuminate an object. The stored light may in an example be released to illuminate an object in combination with light emitted by the light source, which pass together to illuminate the object and therefore provide increased brightness. This can be arranged in some examples to provide increased brightness with no increased power consumption and with no increase in operating temperature.

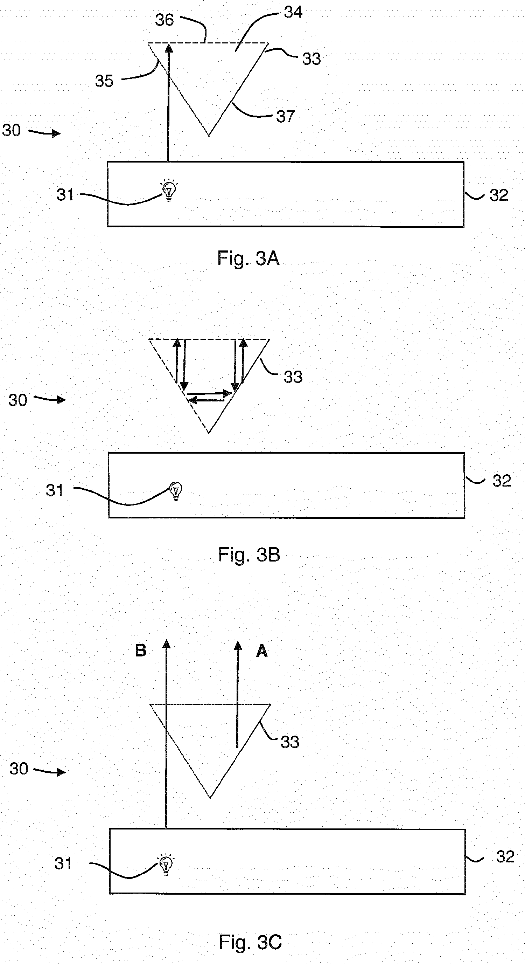

Referring now to Figures 3A to 3C, these show schematically three stages in operation of an example of a light source arrangement 30 according to aspects disclosed herein. The light source arrangement 30 may provide a light source for, for example, a torch (flashlight), a lamp or luminaire, etc., for a display device, etc. In the case of a display device, the light source arrangement 30 may be for example part of a backlight unit for illuminating a display panel of the display device, such as backlight unit for a display device of the types discussed above. The light source arrangement 30 may for example provide a light source for a direct-lit backlight as discussed above.

The light source arrangement 30 has one or more light sources 31. In the case that the light source arrangement 30 is used as part of a backlight for a display device, such as an LCD display device, there may be a large number of light sources 31 which are arranged in an array so as to illuminate respective display elements (such as LCD display elements) of the display device. The light source or sources 31 may be provided in a backlight block 32, which may include for example a reflector and a diffuser, as is known per se.

The light source arrangement 30 includes a light block 33 which provides or defines a chamber 34. The light block 33 is located between the light source 31 and the object to be illuminated. In the case of the light source arrangement 30 providing a backlight unit for a display device, the object to be illuminated is typically a controllable display element of the display device, such as a controllable LCD. In the case that the light source arrangement 30 provides a backlight unit of the direct-lit type, there will be light sources 31 for each controllable display element, and correspondingly, light blocks 33 defining chambers 34 for each light source 31.

In short, the chamber 34 operates to initially trap or buffer light emitted by the light source 31. That trapped light is then subsequently released as and when required. Numerous arrangements for trapping and subsequently releasing the light are possible and some examples will be discussed below. Moreover, a number of different geometric arrangements for the light block 33 and chamber 34 are possible. For simplicity, an example of the chamber 34 having a triangular cross-section will be described, it will be understood that other geometric shapes, particularly for the cross-section are possible.

The light block 33 has a first wall 35 which is located in front of the corresponding light source 31 so that light emitted by the light source 31 is incident on the first wall 35. The first wall 35 is arranged so that light incident from the outside of the chamber 34 is transmitted by the first wall 35 and therefore enters the chamber 34. Examples of arrangements for achieving this will be discussed below.

The light block 33 has a second wall 36 which is arranged so that light exiting the chamber 34 passes through the second wall 36 towards the object to be illuminated, which in this example is a display element of the display device.

Last, in this example, there is a third wall 37 which joins the first wall 35 and second wall 36.

As mentioned, the first wall 35 initially admits light emitted by the light source 31 into the chamber 34, as indicated in Figure 3A.

As indicated in Figure 3B, when it is required to trap or buffer the light in the chamber 34, the second wall 36 is arranged to be reflective at least on its internal wall facing the interior of the chamber 34. Likewise, at this point when it is required that light is to be buffered in the chamber 34, at least the interior of the first wall 35 which faces the chamber 34 is reflective. In this example, the third wall 37 is arranged always to be reflective at least on its innermost surface which faces the chamber 34. Accordingly, as indicated schematically in Figure 3B, at this point the inner surface of each wall 35, 36, 37 is reflective. This means that light from the light source 31 that has entered the chamber 34 is trapped in the chamber 34 as it is reflected by each of the innermost surfaces of the walls 35, 36, 37 of the chamber 34. At this point in time, the light source 31 may be switched off so that it is not emitting light (and therefore not consuming electrical power).

Subsequently, as indicated in Figure 3C, when it is desired to release the light from the chamber 34, the second wall 36 is controlled so as to be transmissive to the light. The light at this point can therefore exit the chamber 34 through the second wall 36 as indicated by the arrow A. In addition, if desired at this point in time, the light source 31 can also be caused to emit light again. The first wall 35 allows the light emitted by the light source 31 to pass through. Also, at this time, the second wall 36 is transmissive. Accordingly, at this point in time, light emitted by the light source 31 can also pass in the direction of the object to be illuminated, as indicated by the arrow B. Accordingly, with this arrangement, at this point in time and as indicated schematically by Figure 3C, both light A that was previously trapped in the chamber 34 and light B that is being emitted by the light source 31 can pass towards the object to be illuminated, thereby in effect (practically) doubling the amount of light that is incident on the object to be illuminated, and therefore doubling the brightness of the illumination of the object.

Notably, this increase of the amount of illumination of the object uses light that was previously transmitted by the light source 31 and buffered in the chamber 34 in combination with light being currently emitted by the light source 31. At the time that the light is being buffered in the chamber 34, the light source 31 may be off, as indicated schematically in Figure 3B and mentioned above. Accordingly, even though for example twice the amount of light is caused to be incident on the object to be illuminated at the time represented in Figure 3C, over time the power consumption may be unaffected. In particular, the off time of the light source 31, at the time indicated in Figure 3B, and the on time of the light source 31, when both the trapped light A from the chamber 34 and the direct light B from the light source 31 are both being passed to the object to be illuminated, can be short and can be alternated rapidly in time. With fast transitions between these off/buffering times and the on/release times, the user is unlikely to notice the off times, because of the well-known phenomenon of persistence of vision. In this regard, it may be noted that the use of the light chamber 34 and the turning on and off of the light source 31 and the trapping of the light in the chamber 34 may be used in addition to the use of PWM to control the light source (s) 31 in a backlight unit for a display device as is known in the prior art. That is, the trapping and subsequent release of the light in order to obtain increased brightness can be used on top of the PWM that is conventionally used in a number of display devices. As specific example, the modulation frequency that is used in PWM may be somewhere in the range of approximately 200 Hz up to KHz or more. In contrast, the rate of switching on and off the light sources 31 and trapping and subsequent release of light by the chamber 34 may be carried out at a frequency in the range of say 20 to 100 Hz or so.

Different arrangements for the walls 35, 36, 37 of the light block 33 are possible. As indicated by a solid line in the figures, the third wall 37 may always be reflective at least on its innermost surface. In contrast, the first wall 35 has to be transmissive to light that is incident from the outside to allow the light to enter the chamber 34. This is indicated by dotted lines in for example Figure 3A, and also in Figure 3C. The interior of the first wall 35 needs to be reflective at least at the time that light is being trapped within the chamber 34 which indicated by dashed lines for the first wall 35 in Figure 3B. For this, the first wall 35 may be for example a half-silvered wall so that it is always transmissive from the outside, but always reflective on the inside. As an alternative, materials are known that can be controlled so as to be selectively transmissive and reflective. Such materials include for example a polymer dispersed liquid crystal, which can be controlled by application of a suitable electric current/voltage.

For the second wall, this needs to be reflective at least when light is being trapped in the chamber 34, as indicated by dashed lines in Figures 3A and 3B. On the other hand, the second wall 36 must be transmissive at least when light is being released from the chamber 34, as indicated by dotted lines in Figure 3C. The second wall 34 may be formed of a material that is controllably selectively transmissive or reflective. Suitable materials include again for example a polymer dispersed liquid crystal.

The light block 33 may be formed such that it is hollow. A hollow chamber 34 may be evacuated so as to be substantially empty. Alternatively, a hollow chamber may contain for example a gas or a mixture of gases, including for example air. As an alternative, there may be advantage in some applications in filling the chamber 34 with some transparent liquid or mixture of liquids. Indeed, the chamber 34 itself may be formed by a solid material. Suitable gases, mixtures of gases, liquids, mixtures of liquids and solids will be selected according to for example the application of the light source arrangement 30, the specific wavelength or wavelengths of the light emitted by the light source(s) 31, etc.

It should be noted that references herein to a material or wall or the like being transmissive and reflective are to be taken to meaning transmissive and reflective at least to the wavelengths of light that are emitted by the light sources 31 that are used in the light source arrangement.

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. A light source arrangement, the light source arrangement comprising:
a light source for emitting light; and
a chamber for receiving light emitted by the light source;
the chamber having a first wall through which light emitted by the light source can pass into the interior of the chamber;
the chamber having a second wall through which light in the interior of the chamber can pass to exit the interior of the chamber;
the second wall being controllable so as to be selectively transparent to allow light to exit the interior of the chamber and to be selectively reflective to reflect light within the interior of the chamber.

2. A light source arrangement according to claim 1, wherein the first wall is controllable so as to be selectively transparent to allow light emitted by the light source to pass into the interior of the chamber and to be selectively reflective to reflect light within the interior of the chamber.

3. A light source arrangement according to claim 1, wherein the first wall is transparent to light entering the chamber from the outside and reflective to light within the interior of the chamber.

4. A light source arrangement according to any of claims 1 to 3, wherein the light source and the chamber are arranged such that when the second wall is controlled to be transparent, light exiting the interior of the chamber and light emitted by the light source pass together to an object to be illuminated.

5. A light source arrangement according to any of claims 1 to 4, comprising plural light sources and plural corresponding chambers, each chamber having a first wall through which light emitted by the corresponding light source can pass into the interior of the chamber and a second wall through which light in the interior of the chamber can pass to exit the interior of the chamber, the second wall being controllable so as to be selectively transparent to allow light to exit the interior of the chamber and to be selectively reflective to reflect light within the interior of the chamber.

6. A backlight unit for illuminating one or more display elements of a display device, the backlight unit comprising a light source arrangement according to any of claims 1 to 5.

7. A display device, the display device comprising:
a plurality of controllable display elements which can be selectively controlled to transmit light and to block light, and
a backlight unit comprising a light source arrangement according to claim 6;
wherein each display element is associated with a respective light source and corresponding chamber which are arranged to illuminate the display element.

8. A method of operating a light source arrangement, the light source arrangement comprising a light source for emitting light and a chamber for receiving light emitted by the light source, the chamber having at least first and second walls, the method comprising:
emitting light from the light source to pass through the first wall of the chamber into the interior of the chamber; and
selectively controlling the second wall so as to be reflective thereby to reflect light within the interior of the chamber, and
subsequently selectively controlling the second wall so as to be transparent thereby to allow light to exit the interior of the chamber.

9. A method according to claim 8, comprising:
selectively controlling the first wall so as to be transparent to allow light emitted by the light source to pass into the interior of the chamber; and
subsequently selectively controlling the first wall so as to be reflective to reflect light within the interior of the chamber.

10. A method of operating a display device, the display device comprising a plurality of controllable display elements which can be selectively controlled to transmit light and to block light, and the display device comprising a backlight unit comprising a light source arrangement comprising plural light sources and plural corresponding chambers, each chamber having at least first and second walls, each display element being associated with a respective light source and corresponding chamber which are arranged to illuminate the display element, the method comprising:
for at least one display element and associated chamber and light source:
emitting light from the light source to pass through the first wall of the associated chamber into the interior of the chamber;
selectively controlling the second wall of the chamber so as to be reflective thereby to reflect light within the interior of the chamber; and
selectively controlling the second wall of the corresponding chamber so as to be transparent thereby to allow light to exit the interior of the chamber towards the display element.

11. A method according to claim 10, wherein the method is carried out for all display elements and associated chambers and light sources.

12. A method according to claim 10 or claim 11, wherein, for each display element and associated chamber and light source, the light source and the chamber are arranged such that when the second wall is controlled to be transparent, light exiting the interior of the chamber and light emitted by the light source pass together to the associated display element.
